**Europäisches Patentamt**

**European Patent Office**

**Office européen des brevets**

(19)

(11) Veröffentlichungsnummer: **0 330 107**

**A1**

## (12) EUROPÄISCHE PATENTANMELDUNG

(21) Anmeldenummer: **89102857.3**

(22) Anmeldetag: **18.02.89**

(51) Int. Cl.⁴: **B23D 77/12 , B23D 77/00**

(30) Priorität: **24.02.88 DE 3805729**

(43) Veröffentlichungstag der Anmeldung:
**30.08.89 Patentblatt 89/35**

(84) Benannte Vertragsstaaten:
**AT DE ES FR GB IT SE**

(71) Anmelder: **Krauss, Helmut Dipl.-Ing.**
**Bartningallee 26**
**D-1000 Berlin 21(DE)**

(72) Erfinder: **Krauss, Helmut Dipl.-Ing.**
**Bartningallee 26**
**D-1000 Berlin 21(DE)**

(74) Vertreter: **LOUIS, PÖHLAU, LOHRENTZ &**
**SEGETH**
**Kesslerplatz 1 Postfach 3055**
**D-8500 Nürnberg(DE)**

(54) **Bohr- oder Reibwerkzeug.**

(57) Es wird ein konisches Werkzeug in Form eines Bohrers bzw. insbesondere in Form einer Reibahle beschrieben, bei dem Schneidrippen (12) und Spanrillen (14) entlang des Umfangs des Werkzeugs (10) abwechselnd angeordnet sind. Um Torsionsschwingungen des Werkzeugs (10) während des Betriebseinsatzes zu vermeiden, wird vorgeschlagen, die Schneidrippen (12) entlang des Umfangs des Werkzeugs (10) ungleichmässig verteilt anzuordnen und/oder die Schneidrippen (12) mit voneinander verschiedenen Spanwinkeln (s) und/oder mit voneinander verschiedenen Freiwinkel (f) auszubilden und/oder gegebenenfalls die Schneidrippen (12) mit voneinander verschiedenen Drallsteigungen zu dimensionieren.

FIG.1

EP 0 330 107 A1

## Bohr- oder Reibwerkzeug

Die Erfindung betrifft ein Werkzeug in Form eines konischen Bohrers bzw. insbesondere in Form einer konischen Reibahle, mit Schneidrippen, die während einer Rotation des Werkzeugs um seine zentrale Längsachse mit ihren Schneidkanten eine konische Mantelfläche festlegen und mit Spanrillen, die sich mit den Schneidrippen entlang des Umfangs des Werkzeugs abwechseln, wobei jede Schneidrippe eine Spanfläche und eine Freifläche aufweist, die sich in der Schneidkante treffen und die miteinander einen Keilwinkel einschliessen und wobei die Spanfläche mit einer sich durch die Längsachse des Werkzeugs und durch die entsprechende Schneidkante erstreckenden ersten Bezugsebene einen Spanwinkel und die Freifläche mit einer zur ersten Bezugsebene senkrechten, sich durch die entsprechende Schneidkante erstreckenden zweiten Bezugsebene einen Freiwinkel einschliesst.

Bei derartigen Bohr- oder Reibwerkzeugen sind die sich mit den Spanrillen abwechselnden Schneidrippen am Umfang des Werkzeugs gleichmässig verteilt angeordnet. Das bedeutet, dass die Winkel zwischen den Schneidkanten benachbarter Schneidrippen und der zentralen Längsachse alle gleich gross sind. Weist ein derartiges Werkzeug bspw. drei Schneidrippen auf, dann beträgt der Winkel zwischen benachbarten Schneidkanten und der zentralen Längsachse 120 Winkelgrad. Wenn ein derartiges Werkzeug mit vier bzw. fünf Schneidrippen ausgebildet ist, so beträgt der Winkel zwischen den Schneidkanten benachbarter Schneidrippen 90 Winkelgrad bzw. 72 Winkelgrad. Desgleichen ist bei den bekannten Werkzeugen der eingangs genannten Art der Spanwinkel bei jeder Schneidrippe bzw. der Freiwinkel bei jeder Schneidrippe konstant, wobei die einzelnen Schneidrippen bzw. Spanrillen in Längsrichtung des Werkzeugs geradlinig, d.h. zur zentralen Längsachse des Werkzeugs parallel verlaufen können, oder mit einem Drall mit einer Steigung ausgebildet sein können. Durch die symmetrische Ausbildung der bekannten Bohr- oder Reibwerkzeuge bezüglich der Umfangsverteilung der Schneidrippen sowie des Spanwinkels und des Freiwinkels und gegebenenfalls der für alle Schneidrippen gleichen Drallsteigung sind während des Einsatzes eines solchen Werkzeuges Torsionsschwingungen des Werkzeuges nur dadurch bedingt zu vermeiden, dass das Werkzeug mit einer relativ geringen Schnittgeschwindigkeit eingesetzt wird.

Deshalb liegt der Erfindung die Aufgabe zugrunde, ein Werkzeug der eingangs genannten Art zu schaffen, bei dem Torsionsschwingungen auch bei vergleichsweise hohen Schnittgeschwindigkeiten verhindert werden.

Diese Aufgabe kann erfindungsgemäss dadurch gelöst werden, dass die Schneidrippen am Umfang des Werkzeugs ungleichmässig verteilt angeordnet sind. Dabei können die Schneidrippen am Umfang des Werkzeugs vorzugsweise derart verteilt sein, dass mindestens zwei Winkel zwischen den Schneidkanten benachbarter Schneidrippen und der zentralen Längsachse Primzahlen sind. Weist ein solches Werkzeug bspw. drei Schneidrippen auf, so können die jeweils benachbarten Schneidkanten miteinander die folgenden Winkel einschliessen: 117°, 120° und 123°. Die Zahlen 117 und 123 sind zur Zahl 120 benachbarte Primzahlen. Die der Erfindung zugrundeliegende Aufgabe kann bei einem Werkzeug der eingangs genannten Art auch dadurch gelöst werden, dass die Schneidrippen voneinander verschiedene Spanwinkel aufweisen. Dabei kann der Spanwinkel jeder Schneidrippe entlang seiner Längsausdehnung konstant oder ebenfalls veränderlich sein.

Eine weitere Lösung der der Erfindung zugrundeliegenden Aufgabe ergibt sich bei einem Werkzeug der eingangs genannten Art auch dadurch, dass die Schneidrippen voneinander verschiedene Freiwinkel aufweisen. Auch hierbei kann der Freiwinkel entlang der Längserstreckung jeder Schneidrippe konstant oder veränderlich sein.

Bei einem Werkzeug der eingangs genannten Art, bei dem die durch Spanrillen voneinander räumlich getrennten Schneidrippen in Längsrichtung des Werkzeugs einen Drall mit einer Steigung aufweisen, kann die der Erfindung zugrundeliegende Aufgabe auch dadurch gelöst werden, dass die Schneidrippen voneinander verschiedene Drallsteigungen aufweisen.

Beim erfindungsgemässen Werkzeug ist es selbstverständlich auch möglich, zur Lösung der der Erfindung zugrundeliegenden Aufgabe die Schneidrippen am Umfang des Werkzeugs ungleichmässig verteilt anzuordnen und/oder die Schneidrippen mit voneinander verschiedenen Spanwinkeln und/oder mit verschiedenen Freiwinkeln auszubilden, sowie gegebenenfalls die Schneidrippen mit voneinander verschiedenen Drallsteigungen zu dimensionieren. Durch den einen und/oder anderen Lösungsvorschlag werden während des Einsatzes des Werkzeugs Torsionsschwingungen desselben vermieden, so dass sich keine störenden Rattermarken ergeben, was eine Verbesserung der Oberflächengüte des mit einem solchen Werkzeug bearbeiteten Werkstückes bedeutet. Durch die Vermeidung von Torsionsschwingungen wird ausserdem der Verschleiss des Werkzeugs reduziert, so dass sich eine Erhöhung der Einsatzdauer bzw. der Standzeit des Werkzeugs ergibt. Desgleichen kann die Schnittgeschwindigkeit erhöht werden.

Weitere Einzelheiten, Merkmale und Vorteile ergeben sich aus der nachfolgenden Beschreibung eines in der Zeichnung dargestellten Ausführungsbeispieles des erfindungsgemässen Werkzeugs in form einer konischen Reibahle. Es zeigt:

Fig. 1 eine Seitenansicht des Werkzeugs,

Fig. 2 einen Schnitt durch das Werkzeug gemäss Fig. 1 entlang der Schnittlinie II-II in einem vergrösserten Maßstab, und

Fig. 3 einen stark vergrösserten Abschnitt einer Schneidkante gemäss Figur 2.

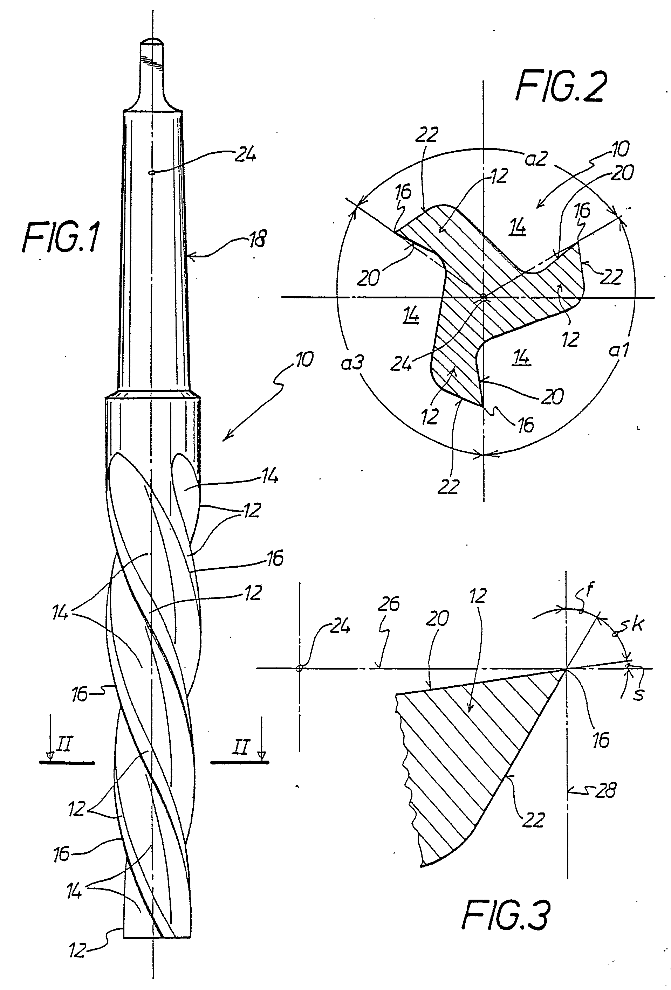

Figur 1 zeigt ein Werkzeug 10 in Form einer konischen Reibahle, die Schneidrippen 12 und zwischen benachbarten Schneidrippen 12 Spanrillen 14 aufweist. Die Schneidrippen 12 bzw. Spanrillen 14 weisen einen Drall auf. Jede Schneidrippe 12 ist mit einer Schneidkante 16 ausgebildet. An jede Schneidkante 16 kann sich eine sog. Rundschliffphase anschliessen.

Mit der Bezugsziffer 18 ist ein kegelförmiger Schaft bezeichnet, mit dem das Werkzeug 10 in einer dafür vorgesehenen (nicht dargestellten) Werkzeughalteeinrichtung befestigbar ist.

Figur 2 zeigt in einer vergrösserten Maßstab einen Querschnitt durch das Werkzeug 10 gemäss Figur 1 entlang der Schnittlinie II-II. Wie aus dieser Figur ersichtlich ist, weist das Werkzeug 10 drei Schneidrippen 12 auf, wobei benachbarte Schneidrippen 12 durch je eine Spanrille 14 voneinander im Umfangsrichtung des Werkzeugs 10 räumlich getrennt sind. Jede Schneidrippe 12 weist eine Schneidkante 16 und eine von der Schneidkante 16 ausgehende Spanfläche 20 auf. Mit der Bezugsziffer 22 sind Freiflächen bezeichnet, die sich bei dem in Fig. 2 dargestellten Ausführungsbeispiel des Werkzeugs 10 unmittelbar an die Schneidkanten 16 der entsprechenden Schneidrippen 12 anschliessen. Es ist jedoch auch möglich, dass zwischen jeder Schneidkante 16 und dazugehörige Freifläche 22 eine (in Fig. 2 nicht dargestellte) Rundschliffphase vorgesehen ist. Die Schneidrippen 12 sind entlang des Umfangs des Werkzeugs 10 derart angeordnet, dass ihre Schneidkanten 16 miteinander ausgehend von der zentralen Längsachse 24 (sh. auch Fig. 1) Winkel a1, a2 und a3 einschliessen. Diese Winkel a1, a2 und a3 betragen bspw. 120°, 117° und 123°. Bei den Winkeln a2 und a3 handelt es sich also um Primzahlen.

Figur 3 zeigt in einem stark vergrösserten Maßstab einen Abschnitt einer Schneidrippe 12 mit der Schneidkante 16, der Spanfläche 20 und der Freifläche 22. Durch die Schneidkante 16 und durch die zentrale Längsachse 24 des Werkzeugs 10 hindurch erstreckt sich eine erste Bezugsebene 26, mit welcher die Spanfläche 20 einen Spanwinkel s einschliesst. Eine zweite Bezugsebene 28 steht auf der ersten Bezugsebene 26 senkrecht und erstreckt sich durch die Schneidkante 16 hindurch. Die Freifläche 22 schliesst mit der zweiten Bezugsebene 28 einen Freiwinkel f ein. Die Spanfläche 20 schliesst mit der Freifläche 22 einen Keilwinkel k ein, so dass die Summe aus dem Freiwinkel f, dem Keilwinkel k und dem Spanwinkel s 90 Winkelgrad beträgt.

Beim Werkzeug 10 kann jede Schneidrippe 12 mit einem Spanwinkel s und/oder mit einem Freiwinkel f ausgebildet sein, der sich vom Spanwinkel s bzw. vom Freiwinkel f der übrigen Schneidrippen 12 unterscheidet, d.h. die einzelnen Schneidrippen 12 können mit voneinander verschiedenen Spanwinkeln s und/Freiwinkeln f ausgebildet sein. Desgleichen können die Schneidrippen 12 voneinander verschiedene Drallsteigungen aufweisen.

## Ansprüche

1. Werkzeug in Form eines konischen Bohrers bzw. insbesondere in Form einer konischen Reibahle, mit Schneidrippen (12), die während einer Rotation des Werkzeugs (10) um seine zentrale Längsachse (24) mit ihren Schneidkanten (16) eine konische Mantelfläche festlegen, und mit Spanrillen (14), die sich mit den Schneidrippen (12) entlang des Umfangs des Werkzeugs (10) abwechseln, wobei jede Schneidrippe (12) eine Spanfläche (20) und eine Freifläche (22) aufweist, die sich in der Schneidkante (16) treffen und die miteinander einen Keilwinkel (k) einschliessen, und wobei die Spanfläche (20) mit einer sich durch die Längsachse (24) des Werkzeugs (10) und durch die entsprechende Schneidkante (16) erstreckenden ersten Bezugsebene (26) einen Spanwinkel (s) und die Freifläche (22) mit einer zur ersten Bezugsebene (26) senkrechten, sich durch die entsprechende Schneidkante (16) erstreckenden zweiten Bezugsebene (28) einen Freiwinkel (f) einschliesst, **dadurch gekennzeichnet,** dass die Schneidrippen (12) entlang des Umfanges des Werkzeugs (10) ungleichmässig verteilt angeordnet sind.

2. Werkzeug nach Anspruch 1, **dadurch gekennzeichnet,** dass die Schneidrippen (12) am Umfang derart verteilt sind, dass mindestens zwei Winkel zwischen den Schneidkanten (16) benachbarter Schneidrippen (12) und der zentralen Längsachse (24) Primzahlen sind.

3. Werkzeug nach dem Oberbegriff des Anspruches 1,

**dadurch gekennzeichnet,**

dass die Schneidrippen (12) voneinander verschiedene Spanwinkel (s) aufweisen.

4. Werkzeug nach dem Oberbegriff des Anspruches 1,

**dadurch gekennzeichnet,**

dass die Schneidrippen (12) voneinander verschiedene Freiwinkel (f) aufweisen.

5. Werkzeug nach dem Oberbegriff des Anspruches 1, bei dem die durch Spanrillen (14) voneinander räumlich getrennten Schneidrippen (12) in Längsrichtung des Werkzeugs (10) einen Drall mit einer Steigung aufweisen,

**dadurch gekennzeichnet,**

dass die Schneidrippen (12) voneinander verschiedene Drallsteigungen aufweisen.

*FIG.1*

*FIG.2*

*FIG.3*

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 195 838 (ROCKWELL INTERNATIONAL) <br> * Anspruch 1; Figuren 1-6 * | 1 | B 23 D 77/12 <br> B 23 D 77/00 |
| Y | | 3,4,5 | |
| Y | DE-C- 546 245 (BAAKES) <br> * gesamtes Dokument * <br> --- | 5 | |
| Y | FR-A-1 200 029 (ROUGIER) <br> * Ansprüche 1,2; Figuren 1-6 * <br> --- | 3,4 | |
| A | GB-A- 937 767 (VEB WERKZEUGFABRIK KOENIGSEE) <br> * Ansprüche 1-3; Figuren 1,2 * <br> --- | 1,3,4 | |
| A | DE-B-1 627 238 (MONTANWERKE) <br> * Ansprüche 1,2; Figur * <br> ----- | 1 | |

| RECHERCHIERTE SACHGEBIETE (Int. Cl.4) |
|---|
| B 23 D 77/00 <br> B 23 B 51/00 |

Der vorliegende Recherchenbericht wurde für alle Patentansprüche erstellt

| Recherchenort | Abschlußdatum der Recherche | Prüfer |
|---|---|---|
| BERLIN | 19-05-1989 | BERNAS Y.N.E. |

EPO FORM 1503 03.82 (P0403)